Europäisches Patentamt

European Patent Office

Office européen des brevets

(19)

(11) Veröffentlichungsnummer : **0 169 188 B1**

# (12) EUROPÄISCHE PATENTSCHRIFT

(45) Veröffentlichungstag der Patentschrift :
11.10.89

(21) Anmeldenummer : 85890133.3

(22) Anmeldetag : 20.06.85

(51) Int. Cl.⁴ : **C 09 J 5/06, B 27 D 5/00**

(54) Verfahren und Vorrichtung zum Anleimen oder Verkleben von Kantenmaterial an plattenförmige Werkstücke.

(30) Priorität : 20.06.84 AT 2008/84

(43) Veröffentlichungstag der Anmeldung :
22.01.86 Patentblatt 86/04

(45) Bekanntmachung des Hinweises auf die Patenterteilung : 11.10.89 Patentblatt 89/41

(84) Benannte Vertragsstaaten :
CH DE FR GB IT LI SE

(56) Entgegenhaltungen :
DE-A- 1 621 814
DE-A- 1 646 077
DE-U- 7 114 921
FR-A- 2 318 736
GB-A- 1 511 242
US-A- 3 950 211
US-A- 3 981 762

(73) Patentinhaber : Berger, Johann
Nabegg 9
A-3323 Neustadt 1 (AT)

(72) Erfinder : Berger, Johann
Nabegg 9
A-3323 Neustadt 1 (AT)

(74) Vertreter : Torggler, Paul, Dr. et al
Wilhelm-Greil-Strasse 16
A-6020 Innsbruck (AT)

EP 0 169 188 B1

**Beschreibung**

Die Erfindung bezieht sich auf ein Verfahren zum Anleimen oder Verkleben von Kantenmaterial an plattenförmige Werkstücke, wobei ein mit einem Verdünnungsmittel versehenes Klebemittel, beispielsweise Leim, auf das Kantenmaterial als auch auf die plattenförmigen Werkstücke aufgetragen, daraufhin erwärmt, beispielsweise mit Warmluft beaufschlagt wird, und anschließend das Kantenmaterial an die plattenförmigen Werkstücke angedrückt wird.

Weiters bezieht sich die Erfindung auf eine Vorrichtung zur Durchführung des Verfahrens mit einer Auflagevorrichtung für die Werkstücke einer Kantenzuführeinrichtung, einer Leimauftragseinrichtung, Anpreßmitteln zum Anpressen des Kantenmaterials an die Werkstücke und einer Heizvorrichtung zum Anwärmen des Klebemittels, mit der Heißluft über Düsen dem Kantenmaterial und den Werkstücken zugeführt wird, wobei mehrere Heißluftdüsen in der Durchlaufrichtung der Werkstücke im Abstand voneinander angeordnet sind.

Aus der DE-B-25 32 503 ist ein Verfahren gemäß dem Oberbegriff des Patentanspruchs 1 und eine Vorrichtung gemäß dem Oberbegriff des Patentanspruchs 5 bekannt, mit dem die Aufgabe gelöst werden soll, unter Anwendung eines Dispersionsleimes eine sonst nur mit Schmelzklebern erreichbare verkürzte Abbindezeit des Leimes zu erzielen.

Als nachteilig ist bei dem bekannten Verfahren anzusehen, daß es dabei zu einer Erhitzung der Werkstücke kommt, was zu Materialspannungen führen kann. Das bekannte Verfahren erfordert weiterhin einen relativ hohen Energieaufwand.

Die DE-C-23 57 929 beschreibt ein Verfahren und eine Vorrichtung zum Beschichten der Kanten von plattenförmigen Werkstücken, wobei das bandförmige Beschichtungsmaterial durch eine Vorwärmezone und eine Hauptwärmezone kontinuierlich bewegt wird.

Die DE-A-2 101 977 und die US-A-4 222 812 beschreiben Vorrichtungen zum Anleimen von Kantenmaterial bei denen Heißluft zur Erwarmung herangezogen wird.

Aufgabe der Erfindung ist es, ein Verfahren und eine Vorrichtung der oben genannten Art derart zu verbessern, daß mit einem minimalen Klebeauftrag das Auskommen gefunden werden kann, der Energieaufwand gegenüber herkömmlichen Systemen vermindert werden kann und ein zumindest fast vollständiger Abbau der Werkstoffspannungen erzielt wird.

Mit dem erfindungsgemäßen Verfahren wird die Aufgabe dadurch gelöst, daß der Leim zuerst nur auf das Kantenmaterial aufgetragen wird, worauf das Kantenmaterial beispielsweise mittels einer Anpreßrolle an das Werkstück angedrückt und wieder abgehoben wird, worauf das Klebemittel auf dem Kantenmaterial und dem Werkstück wechselnd mehrmals erwärmt und gekühlt wird, wobei das Abkühlen des Klebemittels im Luftstrom erfolgt, indem Kaltluftdüsen eingesetzt werden.

Durch das erfindungsgemäße Verfahren wird dem aufgebrachten Kleber ein Höchstmaß an Feuchtigkeit entzogen, sodaß dieser optimale Kohäsions- bzw. Adhäsionskraft entwickelt.

Entgegen den derzeit bekannten Systemen wird erfindungsgemäß nur der Kleber erwärmt und wieder abgekühlt. Die klebende Körper, d. h. das Werkstück oder das Kantenmaterial, im Durchlaufverfahren auf die vorgegebene Temperatur aufgeheizt wird. Es war festzustellen, daß bei einem derartigen treten. Des weiteren wird mit dem erfindungsgemäßen Verfahren eine kürzere Aushärtungszeit erzielt.

Zur Erwärmung des Klebemittels wird vorzugsweise Heißluft eingesetzt, zur Kühlung vorteilhaft Kaltluft.

Ein vorteilhaftes Ausführungsbeispiel sieht vor, daß die Erwärmungsphasen unterschiedlich lang sind, wobei die letzte Erwämungsphase die längste ist.

Das Klebemittel, insbesondere der Leim, wird also wechselweise erwärmt, abgekühlt, erwärmt, abgekühlt und erwärmt. Am Schluß dieser intermittierenden Behandlung erfolgt eine vorteilhaft etwas längere Erwärmungsphase, worauf unmittelbar danach das Kantenmaterial auf die Werkstücke angedrückt wird.

Zur Erwärmung des Klebemittels wird vorteilhaft ein Wärmemedium mit 350 °C bis 500 °C eingesetzt.

Die erfindungsgemäße Vorrichtung ist dadurch gekennzeichnet daß zwischen den Heißluftdüsen Kaltluftdüsen angeordnet sind und daß je eine Anpreßrolle und mindestens eine Abhebrolle für das Kantenmaterial in Vorschubrichtung beiderseits der Düsen angeordnet sind und wobei die Heißluftdüsen und die Kaltluftdüsen oberhalb und unterhalb der Werkstückauflage angeordnet sind.

Ein vorteilhaftes Ausführungsbeispiel der Erfindung ist durch je eine Anpreßrolle und eine Abhebrolle für das Kantenmaterial gekennzeichnet, wobei die Abhebrolle zwischen den Anpreßrollen und den Düsen angeordnet ist.

Bei einer derartigen Vorrichtung kann das Klebemittel, beispielsweise der Leim, mit herkömmlichen Mitteln nur auf das Kantenmaterial aufgetragen werden, worauf das Kantenmaterial durch die erste Anpreßrolle mit dem Werkstück in Verbindung gebracht wird und anschließend durch die erste Abhebrolle wieder vom Werkstück abgehoben wird. Auf diese Art und Weise ist das Klebemittel nun sowohl auf das Kantenmaterial, als auch auf das Werkstück aufgetragen. Während das Kantenmaterial und das bzw. die Werkstücke an den Heiß- und Kaltluftdüsen vorbeigeführt werden, befinden sie sich in einem geringen gleichmäßigen Abstand voneinander, der von der Stellung der Abhebrollen definiert wird. Nach abgeschlossener intermittierender Wärme- bzw.

Wärme- und Kühlbehandlung wird das Kantenmaterial von der zweiten Anpreßrolle endgültig an das Werkstück angedrückt.

Vorteilhaft ist vorgesehen, daß die Heißluftdüsen oberhalb der Werkstückauflage und die Kaltluftdüsen unterhalb der Werkstückauflage angeordnet sind.

Nachfolgend wird ein Ausführungsbeispiel der Erfindung anhand der Figuren der beiliegenden Zeichnung eingehend beschrieben.

Fig. 1 zeigt schematisch eine Draufsicht auf eine erfindungsgemäße Vorrichtung.

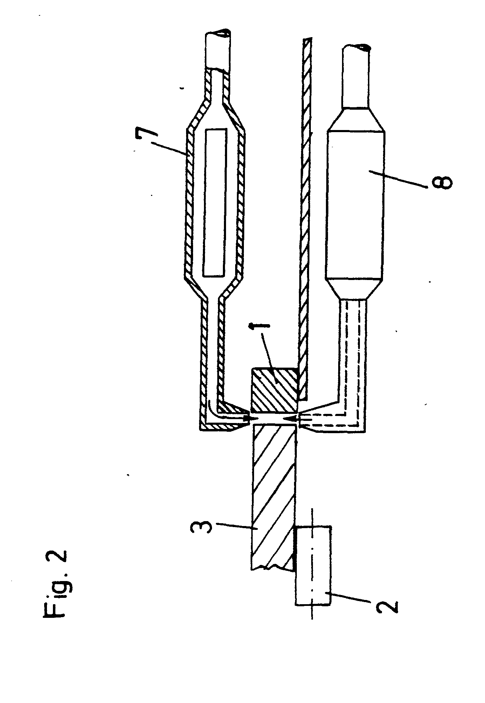

Fig. 2 zeigt einen ebenfalls schematisch gehaltenen Schnitt der Linie II-II der Fig. 1.

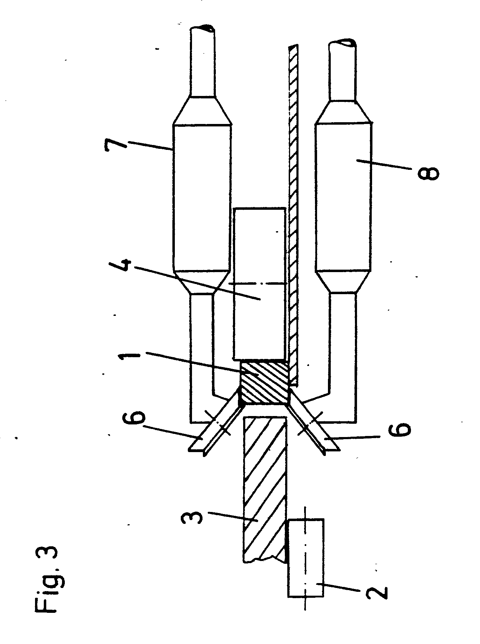

Fig. 3 zeigt einen Schnitt nach der Linie I-I der Fig. 1.

Die erfindungsgemäße Vorrichtung weist eine nicht gezeigte Kantenzuführeinrichtung und eine ebenfalls nicht gezeigte, da nach dem herkömmlichen Stand der Technik ausgeführte Leimauftragsvorrichtung auf, mittels der an die Kante 1 bei der mit LA bezeichneten Stelle Leim aufgetragen wird.

Die Vorrichtung ist weiters mit einer Werkstückauflage 2 für die plattenförmigen Werkstücke 3 versehen. Weiters weist die Vorrichtung eine erste Andruckrolle 4 auf, die das Kantenmaterial bzw. die Kanten an die Werkstücke 3 drückt. Zur besseren Führung des Kantenmaterials 1 ist noch eine Führungsrolle 5 vorgesehen.

Nachdem das Kantenmaterial 1 von der Andruckrolle 4 an das Werkstück 3 gedrückt wurde, wird es von zwei Abhebrollen 6 wieder abgehoben.

Die Abhebrollen 6, 6' befinden sich beiderseits des Werkstückes 3 und greifen jeweils am Rand des Kantenmaterials 1 an, der über das Werkstück 3 hinausragt. Das Kantenmaterial 1 ist etwas breiter als das Werkstück 3.

Damit das Kantenmaterial 1 nicht von den Abhebrollen 6, 6' abrutschen kann, sind diese im Ausführungsbeispiel so ausgeführt, daß sie zwei aufeinandergesetzten Kegelstümpfen entsprechen.

Nach dem Passieren der Abhebrollen 6 sind sowohl die Werkstücke 3 als auch das Kantenmaterial 1 beleimt und durchlaufen nun die Temperaturbehandlungszone TZ.

In der Temperaturbehandlungszone sind Heißluftdüsen 7 und Kaltluftdüsen 8 vorgesehen, wobei die Reihe mit einer Heißluftdüse 7 endet, die größer als die vorangegangenen Düsen ist.

Das durch die Temperaturbehandlungszone durchgeführte Klebemittel wird somit abwechselnd erhitzt, abgekühlt und erhitzt.

Der gleichmäßige Abstand a zwischen dem Kantenmaterial 1 und den Werkstücken 3 wird durch ein zweites Paar Abhebrollen 6, 6' gewährleistet.

Nach dem Passieren dieses zweiten Paares von Abhebrollen 6, 6' wird das Kantenmaterial 1 durch die Anpreßrolle 9 endgültig an die Werkstücke 3 angedrückt. Erforderlichenfalls können eine oder mehrere Parallelrollen 10 vorgesehen sein, um einen längeren Druck auf das Kantenmaterial 1 auszuüben.

Der Vorschub des Kantenmaterials 1 und der Werkstücke 3 kann auf herkömmliche Art erfolgen.

Im vorhergehenden wurde eine Durchlaufvorrichtung gezeigt, doch sei nochmals darauf hingewiesen, daß das erfindungsgemäße Verfahren auch als Einzelprozeß anwendbar ist.

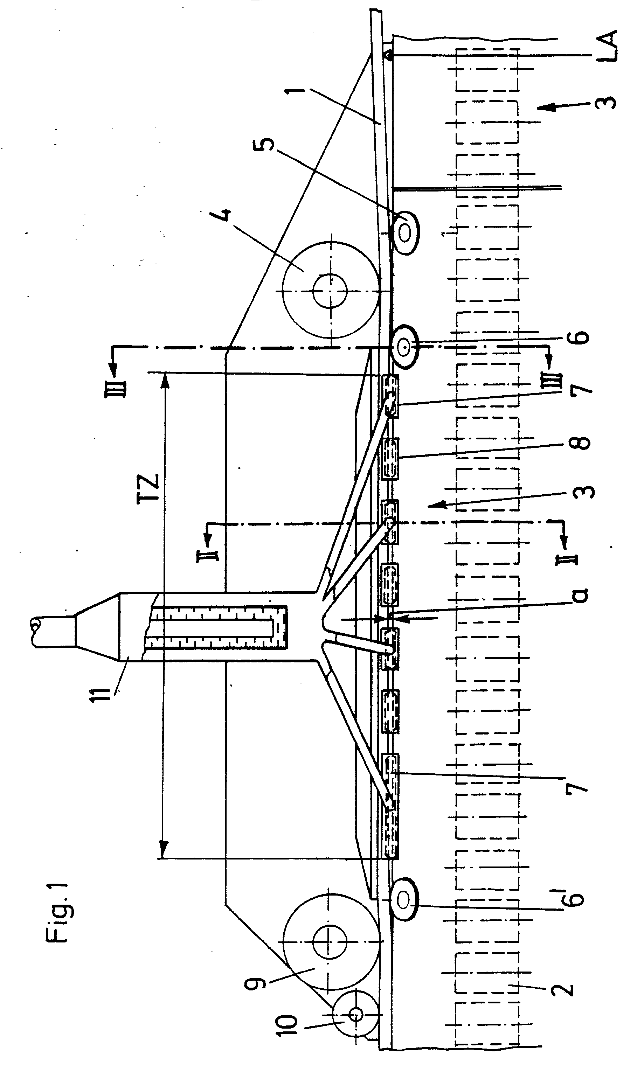

In der Fig. 1 ist noch die Heizeinrichtung zum Erwärmen der aus den Heißluftdüsen 7 ausströmenden Heißluft mit 11 bezeichnet.

Die Heißluft- und Kaltluftdüsen 7, 8 können oberhalb oder unterhalb der Werkstücke 3 in verschiedenen Winkelpositionen angeordnet sein, wobei die Anordnung nicht unbedingt wechselseitig symmetrisch sein muß.

## Patentansprüche

1. Verfahren zum Anleimen von Kantenmaterial (1) an plattenförmige Werkstücke (3), wobei ein mit einem Verdünnungsmittel versehener Leim sowohl auf das Kantenmaterial (1) als auch auf das Werkstück (3) aufgetragen, daraufhin erwärmt, beispielsweise mit Warmluft beaufschlagt wird, und anschließend das Kantenmaterial (1) an die plattenförmigen Werkstücke (3) angedrückt wird, dadurch gekennzeichnet, daß der Leim zuerst nur auf das Kantenmaterial (1) aufgetragen wird, worauf das Kantenmaterial (1) beispielsweise mittels einer Anpreßrolle (4, 9) an das Werkstück (3) angedrückt und wieder abgehoben wird, worauf das Klebemittel auf dem Kantenmaterial und dem Werkstück wechselnd mehrmals erwärmt und gekühlt wird, wobei das Abkühlen des Klebemittels im Luftstrom erfolgt, indem Kaltluftdüsen (8) eingesetzt werden.

2. Verfahren nach Anspruch 1, dadurch gekennzeichnet, daß die Erwärmungsphasen unterschiedlich lang sind, wobei die letzte Erwärmungsphase die längste ist.

3. Verfahren nach Anspruch 1, dadurch gekennzeichnet, daß vor dem Andrücken des Kantenmaterials (1) auf die Werkstücke (3) eine Erwärmungsphase erfolgt.

4. Verfahren nach Anspruch 1, dadurch gekennzeichnet, daß zur Erwärmung des Klebemittels ein Wärmemedium mit 350° bis 500 °C eingesetzt wird.

5. Vorrichtung zur Durchführung des Verfahrens nach Anspruch 1, mit einer Auflagevorrichtung für die Werkstücke, einer Kantenzuführeinrichtung, einer Leimauftragseinrichtung, Anpreßmitteln zum Anpressen des Kantenmaterials an die Werkstücke und einer Heizvorrichtung zum Anwärmen des Klebemittels, mit der Heißluft über Düsen dem Kantenmaterial und den Werkstücken zugeführt wird, wobei mehrere Heißluftdüsen (7) in der Durchlaufrichtung der Werkstücke (3) im Abstand voneinander angeordnet sind, dadurch gekennzeichnet, daß zwischen den Heißluftdüsen (7) Kaltluftdüsen (8) angeordnet sind und daß je eine Anpreßrolle (4, 9) und mindestens eine Abhebrolle (6, 6') für das Kantenmaterial (1) in Vorschubrichtung beiderseits der Düsen (7, 8) angeordnet sind und wobei die Heißluftdüsen (7) und die Kaltluftdüsen (8) oberhalb und unterhalb der Werkstückauflage (2) angeordnet sind.

6. Vorrichtung nach Anspruch 5, dadurch gekennzeichnet, daß die Abhebrollen (6, 6') paarweise beiderseits des Werkstückes (3) angeordnet sind.

7. Vorrichtung nach Anspruch 5, dadurch gekennzeichnet, daß die Abhebrollen (6, 6') zwei aufeinandergesetzten, gegengerichteten Kegelstümpfen entsprechen.

## Claims

1. A method of glueing edge material (1) to plate-shaped workpieces (3) wherein a glue provided with a diluent is applied both to the edge material (1) and to the workpiece (3), then heated, for example subjected to the effect of hot air, and then the edge material (1) is pressed against the plate-shaped workpieces (3), characterised in that the glue is firstly only applied to the edge material (1), whereupon the edge material (1) is pressed for example by means of a pressure roller (4, 9) against the workpiece (3) and lifted off same again, whereupon the adhesive on the edge material and the workpiece is alternately heated and cooled a plurality of times, cooling of the adhesive being effected in the flow of air by using cold air nozzles (8).

2. A method according to claim 1 characterised in that the heating phases are of different lengths, with the last heating phase being the longest.

3. A method according to claim 1 characterised in that a heating phase is carried out prior to the edge material (1) being pressed against the workpieces (3).

4. A method according to claim 1 characterised in that a heating medium at from 350° to 500 °C is used for heating the adhesive.

5. Apparatus for carrying out the method according to claim 1 comprising a support means for the workpieces, an edge feed means, a glue applicator means, pressing means for pressing the edge material against the workpieces and a heating means for heating the adhesive with which hot air is supplied by way of nozzles to the edge material and the workpieces, wherein a plurality of hot air nozzles (7) are arranged at a spacing from each other in the direction of movement of the workpieces (3) through the apparatus, characterised in that cold air nozzles (8) are arranged between the hot air nozzles (7) and that a respective pressure roller (4, 9) and at least one lift-off roller (6, 6') for the edge material (1) are arranged in the feed direction on respective sides of the nozzles (7, 8), and wherein the hot air nozzles (7) and the cold air nozzles (8) are arranged above and below the workpiece support (2).

6. Apparatus according to claim 5 characterised in that the lift-off rollers (6, 6') are arranged in pairs on both sides of the workpiece (3).

7. Apparatus according to claim 5 characterised in that the lift-off rollers (6, 6') correspond to two oppositely directed truncated cones which are fitted together.

## Revendications

1. Procédé pour coller une lisière (1) sur des pièces à traiter en forme de plaques (3), dans lequel on applique une colle contenant un diluant aussi bien sur la lisière (1) que sur l'élément à traiter (3), après quoi on le chauffe, par exemple en envoyant de l'air chaud, et on presse ensuite la lisière (1) contre les pièces à traiter en forme de plaques (3), caractérisé en ce qu'on applique la colle tout d'abord uniquement sur la lisière (1), après quoi on presse la lisière (1), par exemple à l'aide d'un galet presseur (4, 9) contre la pièce à traiter (3), et on l'écarte à nouveau, après quoi on chauffe et on refroidit plusieurs fois en alternance la colle située sur la lisière et la pièce à traiter, le refroidissement de la colle étant effectué dans un courant d'air obtenu en utilisant des buses (8) de projection d'air froid.

2. Procédé selon la revendication 1, caractérisé en ce que les phases de chauffage ont des durées différentes, la dernière phase de chauffage étant la plus longue.

3. Procédé selon la revendication 1, caractérisé en ce qu'on met en oeuvre une phase de chauffage avant de presser la lisière (1) sur les pièces à traiter (3).

4. Procédé selon la revendication 1, caractérisé en ce que pour chauffer la colle, on utilise un fluide de chauffage situé à une température de 350° à 500 °C.

5. Dispositif pour la mise en oeuvre du procédé selon la revendication 1, comportant un dispositif de support pour les pièces à traiter, un dispositif d'amenée d'une lisière, un dispositif pour appliquer la colle, des moyens de pressage pour presser la lisière contre les pièces à traiter et un dispositif de chauffage pour chauffer la colle et à l'aide duquel de l'air chaud est envoyé par l'intermédiaire de buses sur la lisière et les pièces à traiter, plusieurs buses (7) de projection d'air chaud étant disposées à distance les unes des autres dans la direction de déplacement des pièces à traiter (3), caractérisé en ce que des buses (8) de projection d'air froid sont disposées entre les buses (7) de projection d'air chaud et en ce qu'un galet presseur (4, 9) et au moins un galet d'écartement (6, 6') pour la lisière (1) sont respectivement disposés, dans la direction d'avancement, de part et d'autre des buses (7, 8), les buses (7) de projection d'air chaud et les buses (8) de projection d'air froid étant disposées au-dessus et au-dessous du support (2) des pièces à traiter.

6. Dispositif selon la revendication 5, caractérisé en ce que les galets d'écartement (6, 6') sont disposés par couples de part et d'autre de la pièce à traiter (3).

7. Dispositif selon la revendication 5, caractérisé en ce que les galets d'écartement (6, 6') correspondent à deux éléments tronconiques disposés l'un au-dessus de l'autre et orientés dans des directions opposées.

Fig. 1

EP 0 169 188 B1

Fig. 2

Fig. 3